# EUROPEAN PATENT APPLICATION

(11) **EP 4 354 036 A1**
(43) Date of publication of application: **17.04.2024**
(21) Application number: 22904719.6
(22) Date of filing: 09.12.2022
(51) Int. Cl.: F24F 11/63, F24F 11/36, F25B 49/02, G06N 20/00, F24F 110/10

(54) **ELECTRONIC APPARATUS AND CONTROL METHOD THEREOF**

(30) Priority: 10.12.2021 KR 20210176926
(71) Applicant: Samsung Electronics Co., Ltd., Suwon-si, Gyeonggi-do 16677 (KR)
(72) Inventor: SONG, Hoyoon, Gyeonggi-do 16677 (KR); LEE, Seungjun, Gyeonggi-do 16677 (KR)
(74) Representative: Gulde & Partner
(86) International application number: PCT/KR2022/020050
(87) International publication number: WO 2023/106890

(57) **Abstract**

An electronic apparatus includes: a communication interface; a memory configured to store a first artificial intelligence model for predicting whether refrigerant leaks from an air conditioner and at least one instruction; and a processor. The processor is configured to, by executing at least one instruction, receive, first operation history information and device information of the air conditioner, determine whether to convert the first operation history information into second operation history information based on the device information and temperature information of a region in proximity to the air conditioner, predict whether the refrigerant leaks from the air conditioner by inputting either the first operation history information or the second operation history information into the first artificial intelligence model based on a result of the determination, and provide prediction information on the refrigerant leakage based on a result of the prediction of whether the refrigerant leaks from the air conditioner.

## Description

### [Technical Field]

The disclosure relates to an electronic apparatus and a control method thereof. More particularly, the discourage relates to an electronic apparatus for predicting whether refrigerant leaks from an air conditioner and a control method thereof.

### [Background Art]

An air conditioner may be installed in an enclosure to provide a more comfortable indoor environment for humans via the movement of hot and cold air to create a comfortable indoor environment, controlling an indoor temperature, and purifying the indoor air. Generally, an air conditioner may include an indoor unit configured as a heat exchanger and installed indoors, and an outdoor unit configured as a compressor and a heat exchanger and configured to supply refrigerant to the indoor unit.

The air conditioner may include the outdoor unit and the indoor unit that are connected through a refrigerant pipe. Refrigerant compressed from the compressor of the outdoor unit may be supplied to the heat exchanger of the indoor unit through the refrigerant pipe. Additionally, the refrigerant exchanged heat in the heat exchanger of the indoor unit may be returned to the compressor of the outdoor unit through the refrigerant pipe. Accordingly, the indoor unit of the air conditioner may discharge cold and hot air indoors through heat exchange using the refrigerant.

The amount of refrigerant in the air conditioner needs to be maintained at an appropriate level. However, the refrigerant of the air conditioner may leak due to various causes. When the refrigerant of the air conditioner leaks, cooling/heating efficiency of the air conditioner may decrease, and components of the air conditioner such as a compressor or a motor may become damaged.

In order to solve the problem above, when the refrigerant leaks, conventional air conditioners may identify whether the refrigerant has leaked and provides refrigerant leak information to the user.

To accomplish this, an external temperature of the air conditioner may be used as a identifying factor while the air conditioner is operating in order to identify whether the refrigerant leaks or not. However, it can be difficult to identify whether the refrigerant leaks or not, since there may be no large temperature difference between the external temperature and the refrigerant with only a cooling operation of the air conditioner below a specific temperature.

In addition, when the refrigerant leaks little by little, it may be difficult to identify whether the refrigerant is leaking. Eventually, this can lead to a problem in that the refrigerant leakage of the air conditioner is only identified when a large fraction of the refrigerant has been lost and the air conditioner has become inoperable.

In a state in which the refrigerant of the air conditioner has leaked a large amount of refrigerant, there is a problem in that either the air conditioner cannot be used at all until it is fixed or can only be used with a greatly deteriorated a performance.

### [Disclosure]

### [Technical Problem]

In order to solve the prior problems, the disclosure provides an electronic apparatus for predicting whether refrigerant leaks from an air conditioner by using operation history information of the air conditioner, and a method for controlling thereof.
Further, the disclosure provides an electronic apparatus for converting cooling history information of the air conditioner into heating history information and predicting whether refrigerant leaks from the air conditioner even at a specific temperature or less, and a control method thereof.

### [Technical Solution]

An electronic apparatus may include: a communication interface; a memory configured to store a first artificial intelligence model for predicting whether refrigerant leaks from an air conditioner and at least one instruction; and a processor disposed in electrical communication with the memory, the processor being configured to control the electronic apparatus. The processor may be configured to, by executing the at least one instruction, receive, through the communication interface from the air conditioner, first operation history information of the air conditioner and device information of the air conditioner, determine whether to convert the first operation history information into second operation history information based on the device information of the air conditioner and temperature information of a region in proximity to the air conditioner, predict whether the refrigerant leaks from the air conditioner by inputting either the first operation history information or the second operation history information into the first artificial intelligence model based on a result of the determination of whether to convert the first operation history into the second operation history, and provide prediction information on the refrigerant leakage based on a result of the prediction of whether the refrigerant leaks from the air conditioner.

The processor may be further configured to, based on the first operation history information being converted to the second operation history information, predict whether the refrigerant leaks from the air conditioner by inputting the second operation history information into the first artificial intelligence model.

The memory may be configured to further store a second artificial intelligence model for converting cooling history information into heating history information. The processor may be configured to, based on a temperature of the region in proximity to the air conditioner being lower than or equal to a threshold value and based on the air conditioner being identified as only capable of cooling, acquire the second operation history information by inputting the first operation history information into the second artificial intelligence model, and predict whether the refrigerant leaks from the air conditioner by inputting the second operation history information into the first artificial intelligence model.

The second artificial intelligence model may be configured to be a model that has been trained to learn a correlation between cooling history information and heating history information of the air conditioner or another air conditioner.

The first operation history information may be configured to be cooling history information of the air conditioner, and the second operation history information may be configured to be heating history information of the air conditioner.

The processor may be configured to, based on the air conditioner being identified as capable of cooling and heating, predict whether the refrigerant leaks from the air conditioner by inputting the first operation history information into the first artificial intelligence model.

The processor may be configured to, based on temperature of the region in proximity to the air conditioner being lower than or equal to a threshold value and the first operation history information being cooling history information, convert the first operation history information into the second operation history information.

The processor may be configured to, based on temperature of the region in proximity to the air conditioner exceeding a threshold value, predict whether the refrigerant leaks from the air conditioner by inputting the first operation history information into the first artificial intelligence model.

The first operation history information may include the temperature information of the region in proximity to the air conditioner, and the device information may include information on whether the air conditioner is capable of cooling or heating.

The first artificial intelligence model may be configured to be a model that has been trained based on cooling operation history information and heating operation history information of the air conditioner leaking refrigerant, and cooling operation history information and heating operation history information of the air conditioner not leaking refrigerant.

A method for controlling an electronic apparatus may include: receiving, from an air conditioner, first operation history information of the air conditioner and device information of the air conditioner; determining whether to convert the first operation history information into second operation history information based on the device information of the air conditioner and temperature information of a region in proximity to the air conditioner; predicting whether refrigerant leaks from the air conditioner by inputting either the first operation history information or the second operation history information into a first artificial intelligence model based on a result of the determination of whether to convert the first operation history into the second operation history; and providing prediction information on the refrigerant leakage based on a result of the prediction of whether the refrigerant leaks from the air conditioner.

The predicting whether the refrigerant leaks may include, based on the first operation history information being converted to the second operation history information, predicting whether the refrigerant leaks from the air conditioner by inputting the second operation history information into the first artificial intelligence model.

The predicting whether the refrigerant leaks may include, based on a temperature of the region in proximity to the air conditioner being lower than or equal to a threshold value and based on the air conditioner being identified as only capable of cooling, acquiring the second operation history information by inputting the first operation history information into a second artificial intelligence model for converting cooling history information into heating history information, and predicting whether the refrigerant leaks from the air conditioner by inputting the second operation history information into the first artificial intelligence model.

The second artificial intelligence model may be configured to be a model that has been trained to learn a correlation between cooling history information and heating history information of the air conditioner or another air conditioner.

The first operation history information may be configured to be cooling history information of the air conditioner, and the second operation history information is configured to be heating history information of the air conditioner.

The processor may be configured to, based on the air conditioner being identified as capable of cooling and heating, predict whether the refrigerant leaks from the air conditioner by inputting the first operation history information into the first artificial intelligence model.

The predicting whether the refrigerant leaks may include, based on temperature of the region in proximity to the air conditioner being lower than or equal to a threshold value and the first operation history information being cooling history information, convert the first operation history information into the second operation history information.

The predicting whether the refrigerant leaks may include, based on temperature of the region in proximity to the air conditioner exceeding a threshold value, predict whether the refrigerant leaks from the air conditioner by inputting the first operation history information into the first artificial intelligence model.

The first operation history information may include the temperature information of the region in proximity to the air conditioner, and the device information may include information on whether the air conditioner is capable of cooling or heating.

The first artificial intelligence model may be configured to be a model that has been trained based on cooling operation history information and heating operation history information of the air conditioner leaking refrigerant, and cooling operation history information and heating operation history information of the air conditioner not leaking refrigerant.

### [Advantageous Effects]

Through the above-described embodiments, by predicting whether the refrigerant leaks based on the operation history information of the air conditioner and providing the information to the user, the refrigerant leaks and the air conditioner cannot be used or the performance of the air conditioner is greatly improved There is an effect of preventing the problem of deterioration and maintaining the performance of the air conditioner.

In addition, by converting cooling history information of the air conditioner into heating history information to predict whether the refrigerant leaks or not, it is possible to effectively identify whether the refrigerant leaks at or below a specific temperature.

### [Description of Drawings]

FIG. 1 is a block diagram illustrating a configuration of an electronic apparatus according to an embodiment of the disclosure;
FIG. 2 is a view illustrating a method for in which an electronic apparatus learns an artificial intelligence model according to an embodiment of the disclosure;
FIGS. 3 and 4 are views illustrating a process of acquiring operation history information of an air conditioner according to an embodiment of the disclosure;
FIGS. 5A and 5B are views illustrating a process in which an electronic apparatus learns an artificial intelligence model according to an embodiment of the disclosure;
FIG. 6 is a view illustrating a method of predicting refrigerant leakage by an electronic apparatus according to an embodiment of the disclosure;
FIG. 7 is a view illustrating a method of providing, by an electronic apparatus, prediction information on refrigerant leakage according to an embodiment of the disclosure;
FIGS. 8 and 9 are views illustrating a method in which an electronic apparatus according to an embodiment of the disclosure is implemented with a plurality of servers;
FIG. 10 is a view illustrating a method of predicting refrigerant leakage by an electronic apparatus when the electronic apparatus is an air conditioner capable of only cooling according to an embodiment of the disclosure;
FIG. 11 is a view illustrating a method of predicting refrigerant leakage by an electronic apparatus when the electronic apparatus is an air conditioner capable of heating and cooling, according to an embodiment of the disclosure; and
FIG. 12 is a view illustrating a method of controlling an electronic apparatus according to an embodiment of the disclosure.

### [Best Mode]

The example embodiments may vary, and may be provided in different example embodiments. Various example embodiments will be described with reference to accompanying drawings. However, it should be understood that the disclosure is not limited to the specific embodiments described hereinafter, but includes various modifications, equivalents, and/or alternatives of the embodiments of the disclosure. In relation to explanation of the drawings, similar drawing reference numerals may be used for similar elements.

In describing example embodiments, detailed description of relevant known functions or components may be omitted if it would obscure the description of the subject matter.

In addition, the following embodiments may be modified in various other forms, and the scope of the technical spirit of the disclosure is not limited to the following embodiments. Rather, these embodiments are provided to more fully and complete the disclosure, and to fully convey the technical spirit of the disclosure to those skilled in the art.

The terms used in the disclosure are used only to describe specific embodiments, and are not intended to limit the scope of rights. Singular forms are intended to include plural forms unless the context clearly indicates otherwise.

In the disclosure, the terms "include", "may include", "comprise" or "may comprise" designate the presence of features, numbers, steps, operations, components, elements, or a combination thereof that are written in the specification, but do not exclude the presence or possibility of addition of one or more other features, numbers, steps, operations, components, elements, or a combination thereof.

In the description, the term "A or B", "at least one of A or/and B", or "one or more of A or/and B" may include all possible combinations of the items that are enumerated together. For example, the term "A or B" or "at least one of A or/and B" may designate (1) at least one A, (2) at least one B, or (3) both at least one A and at least one B.

The expression "1", "2", "first", or "second" as used herein may modify a variety of elements, irrespective of order and/or importance thereof, and to distinguish one element from another, without limiting the corresponding elements.

When an element (e.g., a first element) is "operatively or communicatively coupled with/to" or "connected to" another element (e.g., a second element), an element may be directly coupled with another element or may be coupled through the other element (e.g., a third element).

When an element (e.g., a first element) is "directly coupled with/to" or "directly connected to" another element (e.g., a second element), an element (e.g., a third element) may not be provided between the other element.

In the description, the term "configured to" may be used interchangeably with, for example, "suitable for", "having the capacity to", "designed to", "adapted to", "made to", or "capable of" under certain circumstances. The term "configured to (set to)" does not necessarily mean "specifically designed to" in a hardware level.

Under certain circumstances, the term "device configured to" may refer to "device capable of" doing something together with another device or components. For example, a phrase "a sub-processor configured to (set to) perform A, B, and C" may refer to a generic-purpose processor (e.g., CPU or application processor) capable of performing corresponding operations by executing a dedicated processor (e.g., embedded processor) for performing corresponding operation, or executing one or more software programs stored in a memory device.

In the embodiments disclosed herein, a term 'module' or 'unit' refers to an element that performs at least one function or operation. The 'module' or 'unit' may be realized as hardware, software, or combinations thereof. In addition, a plurality of 'modules' or a plurality of 'units' may be integrated into at least one module and may be at least one processor except for 'modules' or 'units' that should be realized in a specific hardware.

Various elements and areas in the drawings are schematically drawn. Accordingly, the technical spirit of the disclosure is not limited by a relative size or spacing illustrated in the accompanying drawings.

The example embodiments of the disclosure will be described in greater detail below in a manner that will be understood by one of ordinary skill in the art.

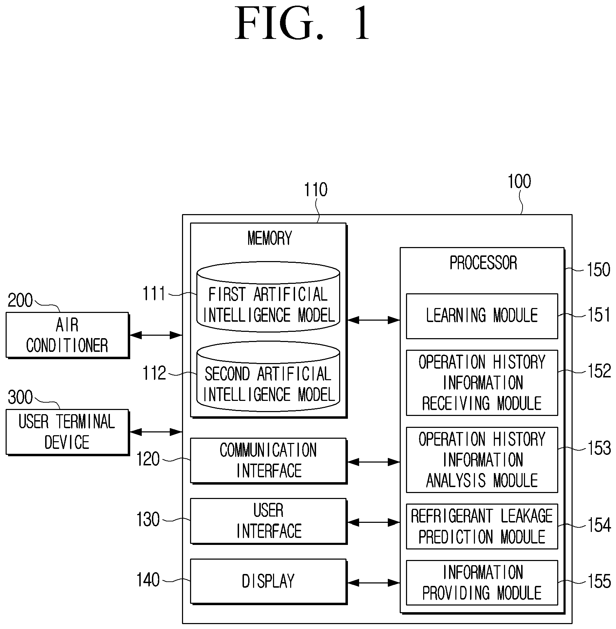

FIG. 1 is a block diagram illustrating a configuration of an electronic apparatus according to an embodiment.

The electronic apparatus 100 may include a memory 110, a communication interface 120, a user interface 130, a display 140, and a processor 150. At least some elements of the electronic apparatus 100 may be omitted, and may further include other elements.

The electronic apparatus 100 may be implemented, for example, as a server, but the embodiments are not limited hereto, and may be implemented in various other forms, such as an air conditioning device (e.g., air conditioner), a user terminal device, a smartphone, a tablet personal computer (PC), PC, smart TV, mobile phone, personal digital assistant (PDA), laptop, media player, a micro server, a global positioning system (GPS) device, e-book a terminal, a digital broadcasting terminal, a navigation system, a kiosk, an MP3 player, a digital camera, a wearable device, a home appliance, and other mobile or non-mobile computing devices.

At least one instruction related to the electronic apparatus 100 may be stored in the memory 110. An operating system (O/S) for driving the electronic apparatus 100 may be stored in the memory 110. Additionally, various software programs or applications for operating the electronic apparatus 100 may be stored in the memory 110. The memory 110 may include a semiconductor memory such as a flash memory or a magnetic storage medium such as a hard disk.

Specifically, various software modules for operating the electronic apparatus 100 may be stored in the memory 110, and the processor 150 may execute various software modules stored in the memory 110 to control the operation of the electronic apparatus 100.

In other words, the memory 110 may be accessed by the processor 150 and perform readout, recording, correction, deletion, update, or other operations, on data by the processor 150.

As used in this disclosure, the term memory 110 may include a memory 110, a ROM (not shown) in the processor 150, a RAM (not shown), or a memory card (not shown) mounted in the electronic apparatus 100 (e.g., micro SD card, memory stick).

Additionally, the memory 110 may store a first artificial intelligence model 111 and a second artificial intelligence model 112. The first artificial intelligence model 111 may be a learned artificial intelligence model that predicts whether the refrigerant leaks from an air conditioner 200 when operation history information of the air conditioner 200 is input. The second artificial intelligence model 112 may be a trained artificial intelligence model that outputs second operation history information when the first operation history information of the air conditioner 200 is input. The first operation history information may be cooling operation history information acquired when the air conditioner 200 operates a cooling operation, and the second operation history information may be a heating operation history acquired when the air conditioner 200 operates a heating operation.

The first artificial intelligence model 111 and the second artificial intelligence model 112 may be models pre-stored in the memory 110 or models learned (or generated) by the electronic apparatus 100.

The first artificial intelligence model 111 and the second artificial intelligence model 112 may be a model trained according to a supervised learning method based on an artificial intelligence algorithm or a model trained according to an unsupervised learning method. The trained model may be configured to include a plurality of network nodes having weight values, and the plurality of network nodes may be located at different depths (or layers) and exchange data according to a convolutional connection relationship. For example, a deep neural network (DNN), a recurrent neural network (RNN), a bidirectional recurrent deep neural network (BRDNN), and/or a generative adversarial network (GAN) may be used as the learning model, but is not limited thereto.

Also, the first artificial intelligence model 111 and the second artificial intelligence model 112 may be models based on a neural network. The first artificial intelligence model 111 and the second artificial intelligence model 112 may be designed to simulate a human brain structure on a computer. The first artificial intelligence model 111 and the second artificial intelligence model 112 may include a plurality of network nodes having weight values that simulate neurons of a human neural network. A plurality of network nodes may each form a connection relationship to simulate a synaptic activity in which a neuron transmits and receives a signal through a synapse. The first artificial intelligence model 111 and the second artificial intelligence model 112 may include, for example, a neural network model or a deep learning model developed from a neural network model. The deep learning model may have a plurality of network nodes that exchange data according to a convolutional connection relationship while being located at different depths (or layers). For example, a model such as a deep neural network (DNN), a recurrent neural network (RNN), or a bidirectional recurrent deep neural network (BRDNN) may be used as a response providing model, but is not limited thereto.

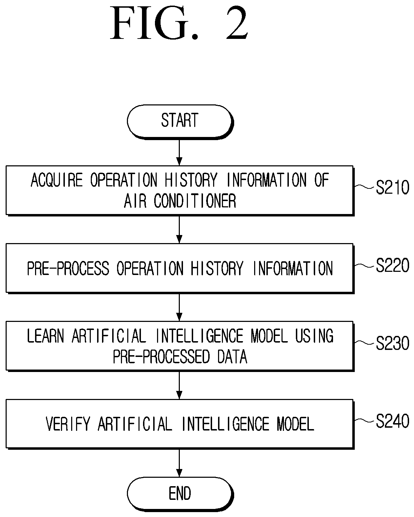

A detailed method for learning the first artificial intelligence model 111 and the second artificial intelligence model 112 will be described below with reference to FIG. 2.

The memory 110 may store registration information (or identification information) of the air conditioner 200 and a user terminal device 300. The electronic apparatus 100 may predict whether the refrigerant leaks or not by acquiring operation history information from the air conditioner 200 registered in the memory 110, and transmit refrigerant leak prediction information to the registered user terminal device 300.

The communication interface 120 may include circuitry and may be an element capable of communicating with an external device and a server. The communication interface 120 may transmit and receive data while communicating with an external device or server based on a wired or wireless communication method. The external device and the server may be the air conditioner 200 or the user terminal device 300. The communication interface 120 may include a Wi-Fi module (not shown) and/or an Ethernet module. Each communication module may be implemented in the form of at least one hardware chip. In addition to the above-described communication methods, the wireless communication module may include at least one communication chip that performs communication according to various wireless communication standards such as ZigBee, universal serial bus (USB), mobile industry processor interface camera serial interface (MIPI CSI), 3rd generation (3G), 3rd generation partnership project (3GPP), long term evolution (LTE), LTE advanced (LTE-A), 4th generation (4G), 5th generation (5G), or any other forms of electronic communication. However, this is the embodiments are not limited thereto, and the communication interface 120 may use at least one communication module among various communication modules.

The electronic apparatus 100 may directly communicate with the air conditioner 200 or the user terminal device 300 through the communication interface 120 or communicate with the air conditioner 200 or the user terminal device 300 through an external server (not shown).

The user terminal device 300 may be implemented as a variety of electronic apparatuses capable of communicating with the air conditioner 200 and the electronic apparatus 100, such as a smart phone, tablet, wearable device, TV, home appliance, and/or personal computer.

A user interface 130 is configured to receive a user command for controlling the electronic apparatus 100. The user interface 140 may be implemented to be device such as button, touch pad, mouse and keyboard, or may be implemented to be touch screen that can also perform the function of the display. The button may include various types of buttons, such as a mechanical button, a touch pad, a wheel, etc., which are formed on the front, side, or rear of the exterior of a main body. The electronic apparatus 100 may acquire various user inputs through the user interface 130.

The display 140 may be implemented as a display including a self-luminous element or a display including a non-light-emitting device and a backlight. For example, it may be implemented in various types of displays such as liquid crystal display (LCD), organic light emitting diodes (OLED) displays, light emitting diodes (LED), micro LED, Mini LED, plasma display panel (PDP), quantum dot (QD) displays, quantum dot light-emitting diodes (QLEDs), or the like. In the display 140, a driving circuit, a backlight unit, or the like, which may be implemented in the form of an a-si TFT, a low temperature poly silicon (LTPS) TFT, an organic TFT (OTFT), or the like may also be included.

The display 140 may display prediction information on refrigerant leakage, and in that configuration, a UI for service inspection of the air conditioner 200 may be displayed together.

The processor 150 may control overall operations and functions of the electronic apparatus 100. Specifically, the processor 150 may be connected to the electronic apparatus 100 including the memory 110, and control the overall operation of the electronic apparatus by executing at least one command or module stored in the memory 110 as described above.

The processor 150 may be implemented in various ways. For example, the processor 150 may be implemented as at least one of an application specific integrated circuit (ASIC), an embedded processor, a microprocessor, hardware control logic, a hardware finite state machine (FSM), or a digital signal processor (DSP). Meanwhile, in the disclosure, the term processor 150 may be used to include a central processing unit (CPU), a graphic processing unit (GPU), and/or a main processing unit (MPU).

The operation of the processor 150 for implementing various embodiments of the disclosure may be implemented through the first artificial intelligence model 111, the second artificial intelligence model 112, and a plurality of modules.

Specifically, data for the first artificial intelligence model 111, the second artificial intelligence model 112, and the plurality of modules according to the disclosure may be stored in the memory 110, and the processor 150 may implement various embodiments according to the disclosure by using the first artificial intelligence model 111, the second artificial intelligence model 112, and the plurality of modules after accessing the memory 110 and loading the data for the first artificial intelligence model 111, the second artificial intelligence model 112, and the plurality of modules into the memory or buffer inside the processor 150. The plurality of modules may include a training module 151, an operation history information receiving module 152, an operation history information analysis module 153, a refrigerant leakage prediction module 154, and an information providing module 155.

However, at least one of the first artificial intelligence model 111, the second artificial intelligence model 112, and the plurality of modules according to the disclosure may be implemented as hardware and included in the processor 150 in the form of a system on chip.

The training module 151 may train the artificial intelligence model by using the operation history information of the air conditioner as training data.

Specifically, the training module 151 may use heating/cooling operation history information of the air conditioner in which refrigerant has leaked (or is scheduled to leak) and heating/cooling operation history information of the air conditioner in which the refrigerant is not leaked, as the training data, and train the first artificial intelligence model 111 and store the trained first artificial intelligence model 111 in the memory 110.

The training module 151 may train the second artificial intelligence model 112 by using correlation between the cooling history information and the heating history information of the air conditioner 200 or the other air conditioner as training data, and store the data in the memory 110.

A method for the training module 151 to train the artificial intelligence model will be described with reference to FIG. 2.

Referring to FIG. 2, the training module 151 may acquire operation history information of the air conditioner for learning the artificial intelligence model (see step S210). In that configuration, the training module 151 may acquire operation history information from the air conditioner, but is not limited thereto, and may acquire the information from the user terminal device 300 or an external server. Alternatively, the user may directly register (or upload) the operation history information of the air conditioner for learning the artificial intelligence model to the electronic apparatus 100.

The operation history information of the air conditioner 200 may include at least one of information about the device of the air conditioner 200, information about the operation of the air conditioner 200, information about a state of the air conditioner, information about surrounding environment of the air conditioner 200, information acquired through a sensor of the air conditioner 200, information about a refrigerant of the air conditioner 200, information about an evaporator of the air conditioner 200, information about a refrigerant control valve of the air conditioner 200, and temperature information inside or outside the air conditioner 200, but is not limited thereto, and may include a variety of information related to the operation of the air conditioner 200.

The operation history information may include history values for a plurality of operation factors. For example, the operation factors included in the operation history information of the air conditioner 200 may include device ID, indoor room temperature (RAC), FAC discharge temperature (FAC), RAC EEV opening degree, FAC humidity, total current protection control, Evap Out (RAC), elapsed time after operation power on (e.g., 0 min, 7 min, 14 min, ^), set temperature (FAC), anti-freeze protection control, outdoor abnormal load, set temperature (RAC), indoor room temperature (FAC), outdoor room temperature, discharge, Evap out (FAC), FAC EEV opening degree, Thermo On (RAC), Power Consumption, full current, Evap_In(FAC), RAC humidity, Thermo On(FAC), compressor Hz (Current), Evap_In (RAC), PM 10 (fine dust), RAC operation mode, FAC air volume, FAC power, RAC air volume, RAC power, high load prevention (discharge protection control), FAC operation mode, registration time, and/or refrigerant amount, but is not limited thereto, and may include various operation factors related to the operation 200 of the air conditioner.

The operation history information may include, but is not limited to, device information of the air conditioner, and the training module 151 may separately receive device information of the air conditioner. The device information may be information on whether the air conditioner is capable of only cooling, only heating, or both heating and cooling.

The operation history information may include data generated using data acquired from the air conditioner as well as data acquired from the air conditioner. Specifically, the training module 151 may generate data on a new operation factor based on the acquired data on the operation factor. Specifically, the training module 151 may acquire data (e.g., data for 0 minutes, 7 minutes, and 14 minutes after operation start) for a specific operation factor acquired per specific time unit, and in that configuration, may acquire average value, minimum value, maximum value, variance value, and rate of change for the specific operation factor.

The operation history information may be different depending on whether the refrigerant has leaked, a degree of the refrigerant leak, or whether the refrigerant is scheduled to leak.

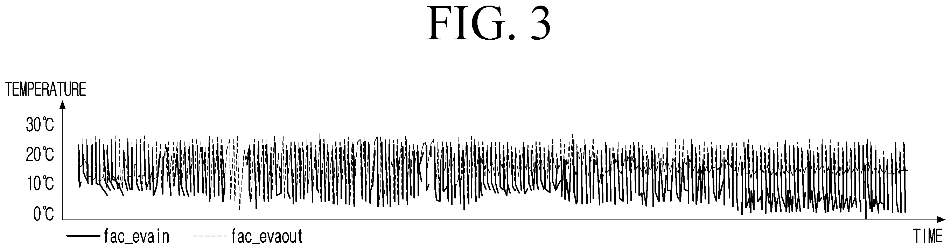

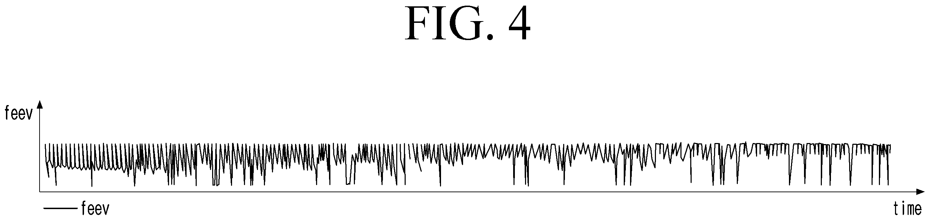

FIGS. 3 and 4 are views illustrating a process in which operation history information is changed as the refrigerant leaks little by little while the air conditioner 200 initially operates normally. During normal operation (initial operation stage) in which the refrigerant is not insufficient, the air conditioner 200 may move a valve value from the evaporator to an appropriate value, and a temperature of the refrigerant passing through the evaporator may not change significantly. However, when the refrigerant leaks later, the amount of refrigerant passing through the evaporator may be insufficient, and the amount of heat absorbed by the refrigerant increases compared to the amount of the refrigerant, and the temperature change of the refrigerant becomes severe, and the air conditioner 200 may open the valve to the maximum such that more refrigerant can pass therethrough.

As shown in FIG. 3, as the refrigerant leaks, the Eva in temperature of the air conditioner 200 may gradually decrease, and the Eva out temperature may gradually increase. That is, the difference between the Eva in temperature value and the Eva Out temperature value may increase depending on the degree of refrigerant leakage. The Eva in temperature value may mean a temperature value of the refrigerant at an inlet of the evaporator (a part where air is introduced into the evaporator), and the Eva out temperature value may mean a temperature value of the refrigerant at an outlet of the evaporator (a part where the air is discharged from the evaporator).

As shown in FIG. 4, in a normal state, a feev value may vary greatly, and as the refrigerant gradually leaks and the valve is always open, the feev (or eev) value may gradually increase and its change amount may decrease. The feev value may be a value indicating a degree of opening of the valve.

The operation history information may vary depending on whether the cooling operation history information or the heating operation history information. In other words, the operation history information (or a history value for the operation factor) acquired when the air conditioner operates a heating operation and the operation history information (or the history value for the operation factor) acquired during the cooling operation may be different.

The training module 151 may pre-process the operation history information of the air conditioner 200 (see step S220 in FIG. 2). Specifically, the operation history information acquired for generating the learning model may have to be matched with whether the refrigerant is leaked (or whether the refrigerant is to be leaked). Accordingly, the training module 151 may perform a labeling process that matches the acquired operation history information with whether the refrigerant is leaked (or whether the refrigerant is to be leaked), but is not limited thereto, and the training module 151 may acquire operation history information on which the labeling process has been completed.

In that configuration, the operation history information on which the labeling process has been completed may be "operation history information of the air conditioner in which the refrigerant has leaked (or the refrigerant is scheduled to leak)" or "operation history information of the air conditioner in which the refrigerant has not leaked (or the refrigerant is not scheduled to leak)?

Alternatively, the operation history information on which the labeling process has been completed may be "cooling operation history information of the air conditioner in which the refrigerant has leaked (or the refrigerant is scheduled to leak)", "heating operation history information of the air conditioner in which the refrigerant has leaked (or the refrigerant is scheduled to leak)", "cooling operation history information of the air conditioner that the refrigerant has not leaked (or the refrigerant is not scheduled to leak)" or "heating operation history information of the air conditioner that the refrigerant has not leaked (or the refrigerant is not scheduled to leak)". The training module 151 may train the first artificial intelligence model 111 using the labeled operation history information.

In addition, the cooling operation history information and the heating operation history information acquired for generating the learning model may be matched (or grouped). Specifically, the training module 151 may group the operation history information labeled as described above.

Specifically, the training module 151 may match "cooling operation history information of the air conditioner" and "heating operation history information of the air conditioner". Alternatively, the training module 151 may match "cooling operation history information of the air conditioner in which the refrigerant has leaked (or the refrigerant is scheduled to leak)", "heating operation history information of the air conditioner in which the refrigerant has leaked (or the refrigerant is scheduled to leak)", "cooling operation history information of the air conditioner that the refrigerant has not leaked (or the refrigerant is not scheduled to leak)" and "heating operation history information of the air conditioner that the refrigerant has not leaked (or the refrigerant is not scheduled to leak)". In that configuration, the training module 151 may train the second artificial intelligence model 112 using the grouped operation history information.

The acquired operation history information may include redundant data, and when the redundant data is input to the learning model, a learning error may increase (overfitting). Accordingly, the training module 151 may delete redundant data to prevent an increase in learning error.

The acquired operation history information may have different units of data. Accordingly, the training module 151 may normalize the acquired operation history information in order to minimize the influence according to the unit of data. For example, the training module 151 may normalize a range of data to be between -1 and 1.

The training module 151 may identify whether there is predetermined exclusion target data in the acquired operation history information. The predetermined exclusion target data may mean data that is affected by a certain level or more according to surrounding environment where the air conditioner 200 is installed, and the predetermined exclusion target data may be set by the user.

The training module 151 may identify an operation factor to be used in an artificial intelligence model learning process among history information including history values for a plurality of operation factors. In Information on the operation factors to be used in the learning process may be stored in the memory 110 or may be input through the user interface 130, but is not limited thereto. Through an iterative learning process, an operation factor that has a high correlation with whether the refrigerant leaks or a high correlation between cooling history information and heating history information may be identified as an operation factor to be used in the learning process. The operation factor identified in the learning process in the artificial intelligence model may be the same as the operation factor used to predict whether the refrigerant leaks. As the method described above, the operation history information analysis module 153 may identify an operation factor for predicting whether the refrigerant leaks in the same way or identify an operation factor used for learning the artificial intelligence model as an operation factor for predicting whether the refrigerant leaks.

Although it has been described that the training module 151 performs a pre-processing of the acquired operation history information, it is not limited thereto, and the training module 151 may acquire the operation history information in which all or part of the pre-processing process is completed.

The training module 151 may train the artificial intelligence model using the operation history information (see step S230 of FIG. 2). The operation history information used for learning the artificial intelligence model may be operation history information in which the pre-processing process is all or partly completed, but is not limited thereto, and the training module 151 may train the artificial intelligence model using operation history information in which a separate pre-processing process is not completed.

Specifically, the training module 151 may generate or train the first artificial intelligence model 111 by using the operation history information.

The training module 151 may train the first artificial intelligence model 111 by using the operation history information labeled whether the refrigerant leaks as the training data. Specifically, the training module 151 may train the artificial intelligence model 111 by using at least one of "cooling operation history information of the air conditioner in which the refrigerant has leaked (or the refrigerant is scheduled to leak)", "heating operation history information of the air conditioner in which the refrigerant has leaked (or the refrigerant is scheduled to leak)", "cooling operation history information of the air conditioner that the refrigerant has not leaked (or the refrigerant is not scheduled to leak)" and "heating operation history information of the air conditioner that the refrigerant has not leaked (or the refrigerant is not scheduled to leak)?

The first artificial intelligence model 111 may learn a correlation between each operation factor included in the operation history information and whether the refrigerant leaks identify (or optimizes) a weight value (or parameter) for each operation factor, and identify (or generate) a function for the correlation between the operation history information and whether the refrigerant leaks

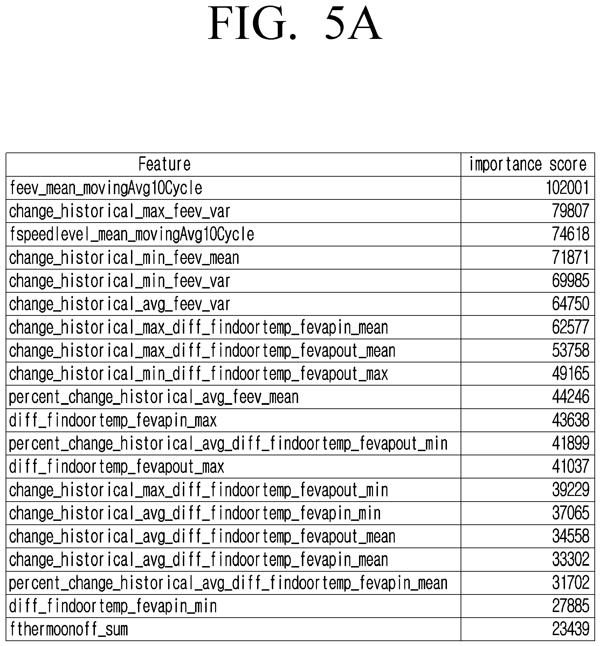

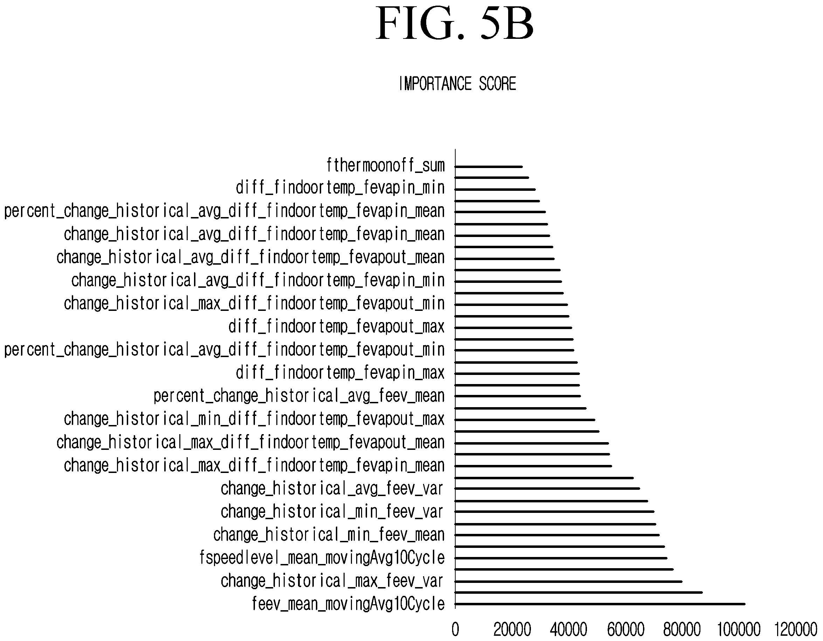

The weight value for each operation factor identified through the first artificial intelligence model 111 may be as shown in FIGS. 5A and 5B. In addition, a weight value for each operation history information included in the operation history information may indicate a degree to which each operation history information affects whether the refrigerant leaks.

Also, the training module 151 may generate or train the second artificial intelligence model 112 by using the operation history information (or the matched operation history information).

The second artificial intelligence model 112 may learn operation history information in which at least one of cooling history information and at least one of heating history information are matched, and learn a correlation between a factor value of each operation factor included in the cooling history information and a factor value of each operation factor included the heating history information.

Specifically, the training module 151 may learn the correlation between a factor value of each operation factor included in the cooling history information and a factor value of each operation factor included the heating history information, using data in which "cooling operation history information of the air conditioner in which the refrigerant has leaked (or the refrigerant is scheduled to leak)", "heating operation history information of the air conditioner in which the refrigerant has leaked (or the refrigerant is scheduled to leak)", "cooling operation history information of the air conditioner that the refrigerant has not leaked (or the refrigerant is not scheduled to leak)" and "heating operation history information of the air conditioner that the refrigerant has not leaked (or the refrigerant is not scheduled to leak)" are matched as training data.

The grouped operation history information may be, but is not limited to, operation history information acquired under the same air conditioner or the same environmental condition, and may be operation history information acquired under different air conditioners and different environmental conditions.

When an operation factor value for cooling history information of a specific air conditioner is input, the second artificial intelligence model 112 may output (or predict) a factor value for an operation factor to be acquired when the specific air conditioner operates virtual heating.

In other words, when cooling operation history information is input, the second artificial intelligence model 112 may output heating operation history information corresponding to the cooling operation history information.

When the learning process is completed, the training module 151 may verify the artificial intelligence model (see step S240 of FIG> 2).

The training module 151 may use some of the received operation history information as training data and use the rest as verification data. In addition, the training module 151 may verify and evaluate an accuracy of the learned artificial intelligence model using the verification data (or evaluation data).

For example, the training module 151 may evaluate as not satisfying a predetermined criterion when, among the output results of the learned model for the verification data, a number or ratio of the verification data for which the output result is not accurate exceeds a predetermined threshold. For example, when the predetermined criterion is defined as a ratio of 2%, when the learned data recognition model outputs an erroneous recognition result for more than 20 of verification data out of a total of 1000 of verification data, the training module 151 may evaluate that the learned data recognition model is not suitable.

When there are a plurality of learned data recognition models, the training module 151 may evaluate whether each learned model satisfies a predetermined criterion, and may determine a model that satisfies the predetermined criterion as a final learning model. In that configuration, when there are a plurality of models satisfying the predetermined criterion, the training module 151 may determine any one or a predetermined number of models predetermined in the order of the highest evaluation score as a final data recognition model.

Also, the electronic apparatus 100 may predict refrigerant leakage of the air conditioner 200 by using the learned artificial intelligence model.

Although it has been described above that the electronic apparatus 100 learns the artificial intelligence model, the disclosure is not limited thereto, and an external device may train the artificial intelligence model in the same manner as described above, and the electronic apparatus 100 may acquire and store the learned artificial intelligence mode from the external device.

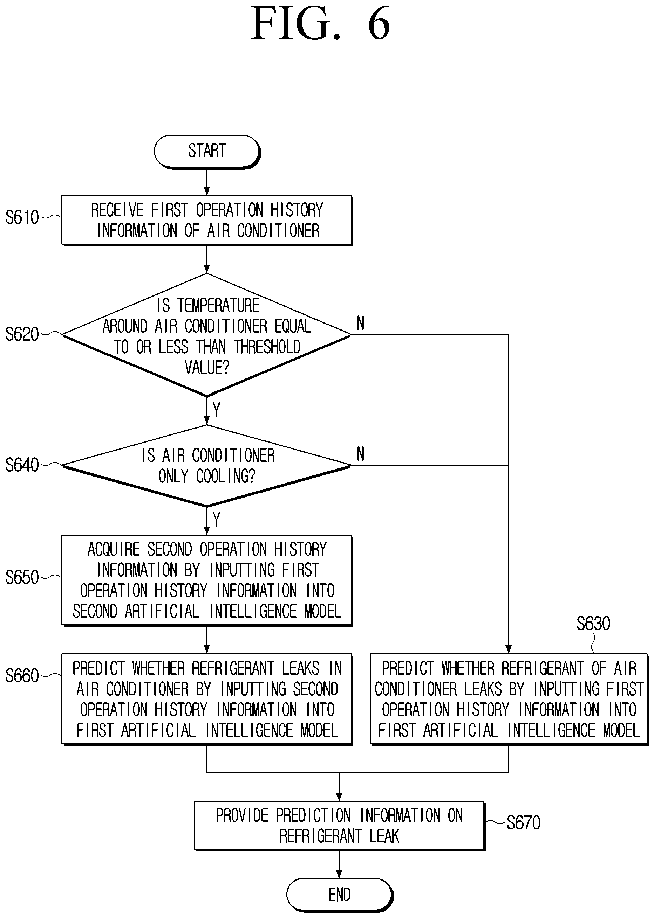

Referring to FIG. 6, the operation history information receiving module 152 may receive, through the communication interface 120, the first operation history information of the air conditioner 200 and device information of the air conditioner 200 from the air conditioner 200 (see step S610). The first operation history information may be cooling operation history information or heating operation history information of the air conditioner 200.

The first operation history information of the air conditioner 200 may include external temperature information of the air conditioner 200. Also, the device information of the air conditioner 200 may include information on whether the air conditioner 200 is capable of cooling or heating. The device information of the air conditioner 200 may be information included in the operation history information.

The operation history information analysis module 153 may pre-process the received first operation history information, and a method of pre-processing the first operation history information in this configuration may be the same as the process of pre-processing the learning data through FIG. 2.

The operation history information analysis module 153 may identify whether to convert the first operation history information into the second operation history information based on the device information of the air conditioner 200 and temperature information around the air conditioner 200.

Specifically, the operation history information analysis module 153 may identify whether the temperature around the air conditioner 200 is equal to or less than a threshold value (see step S620). In that configuration, the threshold value may be a predetermined value stored in the memory 110.

When the temperature around the air conditioner 200 exceeds the threshold value (see step S620-N), the refrigerant leakage prediction module 154 may predict whether the refrigerant of the air conditioner 200 leaks by inputting the first operation history information into the first artificial intelligence model 111 (see step S630)

When the temperature around the air conditioner 200 is less than or equal to the threshold (see step S620-Y), the operation history information analysis module 153 may identify whether the air conditioner 200 is only cooling (see step S640). In that configuration, the operation history information analysis module 153 may identify whether the air conditioner 200 is capable of only cooling or cooling and heating by using the device information of the air conditioner 200.

When the air conditioner 200 is identified as capable of cooling and heating (see step S640-N), the refrigerant leakage prediction module 154 may predict whether the refrigerant of the air conditioner 200 leaks by inputting the first operation history information to the first artificial intelligence model 111 (see step S630) In that configuration, the first artificial intelligence model 111 may output information on whether the refrigerant of the air conditioner 200 leaks or a probability that the refrigerant leaks.

When the first artificial intelligence model 111 outputs information about the probability that the refrigerant of the air conditioner 200 will leak, if the probability that the refrigerant leaks is greater than or equal to a predetermined value, the refrigerant leakage prediction module 154 may predict that the refrigerant leaks. Also, when the probability that the refrigerant leaks is less than a predetermined value, the refrigerant leak prediction module 154 may predict that the refrigerant does not leak.

When the air conditioner 200 is identified as only capable of cooling (see step S640-Y), the operation history information analysis module 153 may acquire second operation history information (e.g., heating operation history information) (see step S650) by inputting the first operation history information (e.g., cooling operation history information) into the second artificial intelligence model 112. In that configuration, the second artificial intelligence model 112 may refer to an artificial intelligence model that outputs heating operation history information when cooling operation history information is input. In other words, the operation history information analysis module 153 may acquire the second operation history information (heating operation history information) by inputting the first operation history information (cooling operation history information) to the second artificial intelligence model 112.

The refrigerant leakage prediction module 154 may predict whether the refrigerant leaks in the air conditioner 200 (see step S660) by inputting the acquired second operation history information into the first artificial intelligence model 111.

In addition, based on the prediction result on whether or not the refrigerant leaks, the information providing module 155 may provide prediction information on the refrigerant leak (see step S670). In that configuration, the prediction information on the refrigerant leakage may include information for displaying a UI for service inspection of the air conditioner 200.

Specifically, the information providing module 155 may control the display 140 to display prediction information on refrigerant leakage and the UI for service inspection of the air conditioner 200.

Alternatively, the information providing module 155 may transmit prediction information on refrigerant leakage to the air conditioner 200 or the user terminal device 300. The air conditioner 200 or the user terminal device 300 that has received the prediction information on the refrigerant leak may display the prediction information on the refrigerant leak and the UI for service inspection of the air conditioner 200.

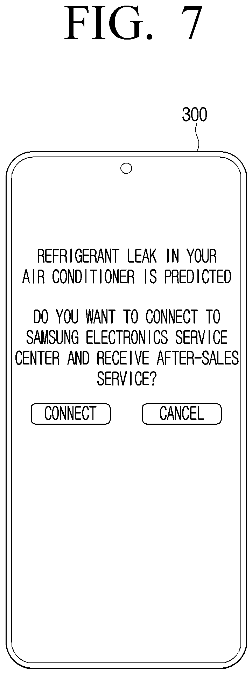

For example, the user terminal device 300 receiving the prediction information on the refrigerant leakage may display the prediction information on the refrigerant leakage and the UI for service inspection of the air conditioner 200 as shown in FIG. 7. However, the disclosure is not limited thereto, and the electronic apparatus 100 may transmit prediction information on refrigerant leakage to the air conditioner 200 to display the information described above and UI, or display the prediction information on refrigerant leakage and UI for service inspection of the air conditioner 200 through the display 140.

Although the method of predicting whether the refrigerant leaks or not is different depending on whether the air conditioner 200 is only capable of cooling, it is not limited thereto. and a method of predicting whether the refrigerant leaks may be different depending on whether the received first operation history information is cooling history information. Specifically, if the external temperature of the air conditioner 200 is less than or equal to a threshold value and the first operation history information is cooling history information, the operation history information analysis module 153 may acquire second operation history information by inputting the first operation history information to the second artificial intelligence model 112, and predict whether the refrigerant leaks from the air conditioner 200 by inputting the second operation history information to the first artificial intelligence model 111. Alternatively, when an external temperature exceeds the threshold value, or when the first operation history information is heating history information, the operation history information analysis module 153 may predict whether the refrigerant leaks from the air conditioner 200 by inputting the first operation history information to the first artificial intelligence model 111.

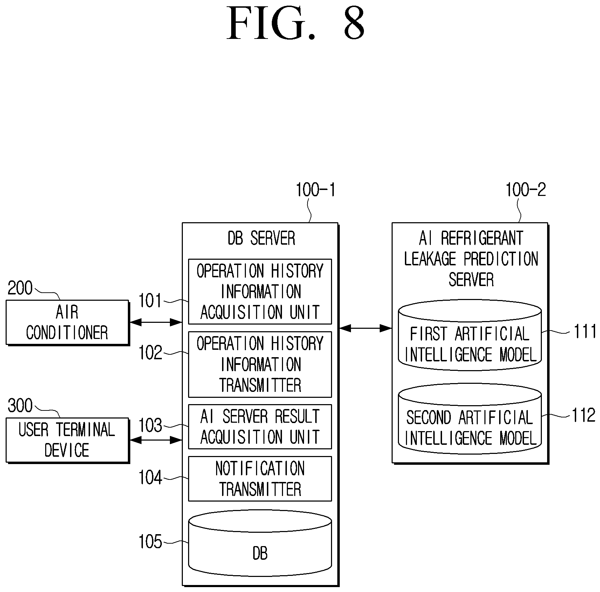

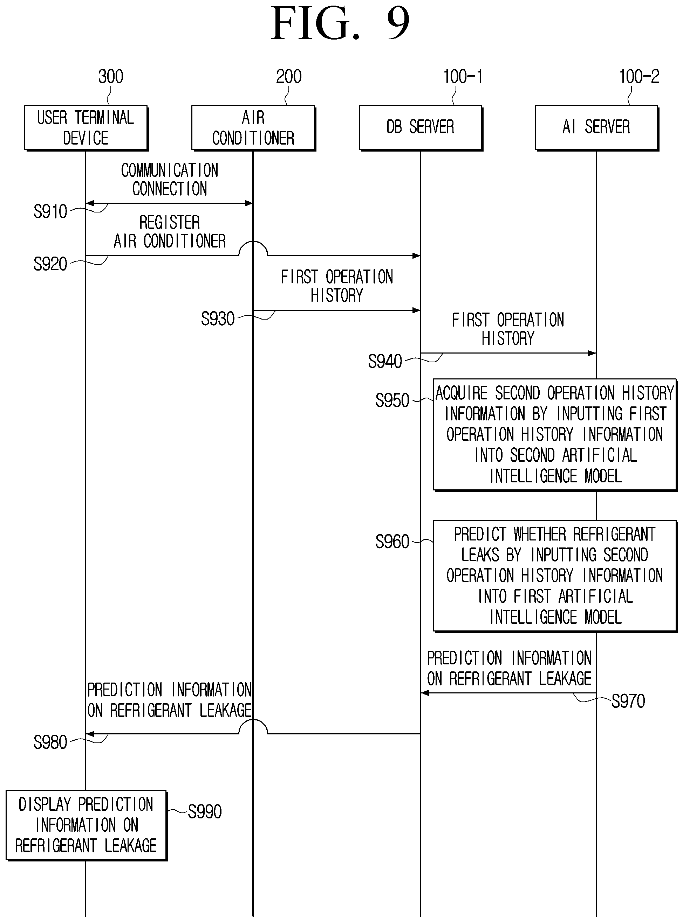

When the electronic apparatus 100 is implemented as a server, it may be implemented as one server, but is not limited thereto, and may be implemented as a plurality of servers, which will be described in detail with reference to FIGS. 8 and 9.

Referring to FIG. 8, the electronic apparatus 100 may include a database (DB) server 100-1 and an AI refrigerant leakage prediction server 100-2. Alternatively, the electronic apparatus 100 may be implemented as either the DB server 100-1 or the AI refrigerant leakage prediction server 100-2. Alternatively, the electronic apparatus 100 may be implemented as the air conditioner 200 or the user terminal device 300 or a separate external device.

In addition, the DB server 100-1, the AI refrigerant leakage prediction server 100-2, the air conditioner 200, and the user terminal device 300 operate in the same manner as all or part of the configuration of the electronic apparatus 100, and redundant descriptions may be omitted.

Meanwhile, the DB server 100-1 may include an operation history information acquisition unit 101, an operation history information transmission unit 102, a refrigerant leakage prediction information acquisition unit 103, a refrigerant leakage prediction information transmission unit 104, and a database 105. In that configuration, the database 105 may store information related to the operation of the air conditioner 200, and/or registration information of the air conditioner 200 and the user terminal device 300.

The memory of the AI refrigerant leakage prediction server 100-2 may store the first artificial intelligence model 111 and the second artificial intelligence model 112.

Operations of the DB server 100-1, the AI refrigerant leakage prediction server 100-2, the air conditioner 200, and the user terminal device 300 will be described in detail with reference to FIG. 9.

Referring to FIG. 9, the user terminal device 300 may transmit/receive data while communicating with the air conditioner 200 (see step S910). In that configuration, the user terminal device 300 may communicate with the air conditioner 200 using a short-distance communication method such as Bluetooth, Wi-Fi, or Wi-Fi Direct. In that configuration, the user terminal device 300 may search for the air conditioner 200 capable of communication connection, and when the air conditioner 200 is found to be connectable, display search information on a display (not shown) of the user terminal device 300, and when a user input for performing a connection with the air conditioner 200 is received through a user interface (not shown) of the user terminal device 300, perform a connection with the air conditioner 200.

Also, the user terminal device 300 may register the air conditioner 200 to the DB server 100-1 (see step S920). Specifically, when a user input for registering the air conditioner 200 to the DB server 100-1 is received through the user interface of the user terminal device 300, the user terminal device 300 may register the air conditioner 200 in the DB server 100-1. In that configuration, the user terminal device 300 may register the air conditioner 200 in the DB server 100-1 by transmitting identification information of the air conditioner 200 to the DB server. However, the disclosure is not limited thereto, and the user terminal device 300 may transmit registration information for registration in the DB server 100-1 to the air conditioner 200.

The air conditioner 200 registered in the DB server 100-1 may transmit first operation history information of the air conditioner 200 to the DB server during a cooling or heating operation (see step S930). In other words, the operation history information acquisition unit 101 of the DB server 100-1 may acquire the first operation history information from the air conditioner 200 registered in the DB server.

The operation history information transmission unit 102 of the DB server 100-1 may transmit the first operation history information received from the air conditioner 200 to the AI refrigerant leakage prediction server 100-2 (see step S940).

The AI refrigerant leakage prediction server may identify whether to convert the first operation history information into the second operation history information based on the device information of the air conditioner 200 and temperature information around the air conditioner 200. In that configuration, a method of identifying whether to convert may be the same as the method described with reference to FIG. 6.

When a temperature around the air conditioner 200 is less than or equal to a threshold value and the air conditioner 200 is a device capable of only cooling, the AI refrigerant leakage prediction server 100-2 may acquire second operation history information (heating operation history information of the air conditioner 200 (see step S950) by inputting the first operation history information (e.g., cooling operation history information of the air conditioner 200) into the second artificial intelligence model 112.

The AI refrigerant leakage prediction server 100-2 may predict whether the refrigerant leaks from the air conditioner 200 (see step S960) by inputting the second operation history information into the first artificial intelligence model.

The AI refrigerant leakage prediction server 100-2 may transmit prediction information on the refrigerant leakage of the air conditioner 200 to the DB server (see step S970). In other words, an AI server result acquisition unit 103 of the DB server 100-1 may receive the refrigerant leakage prediction information from the AI refrigerant leakage prediction server 100-2.

In addition, a notification transmitter 104 of the DB server 100-1 may transmit prediction information on refrigerant leakage to the user terminal device 300 (see step S980).

Accordingly, the user terminal device 300 may provide the prediction information on the refrigerant leakage to the user (see step S990).

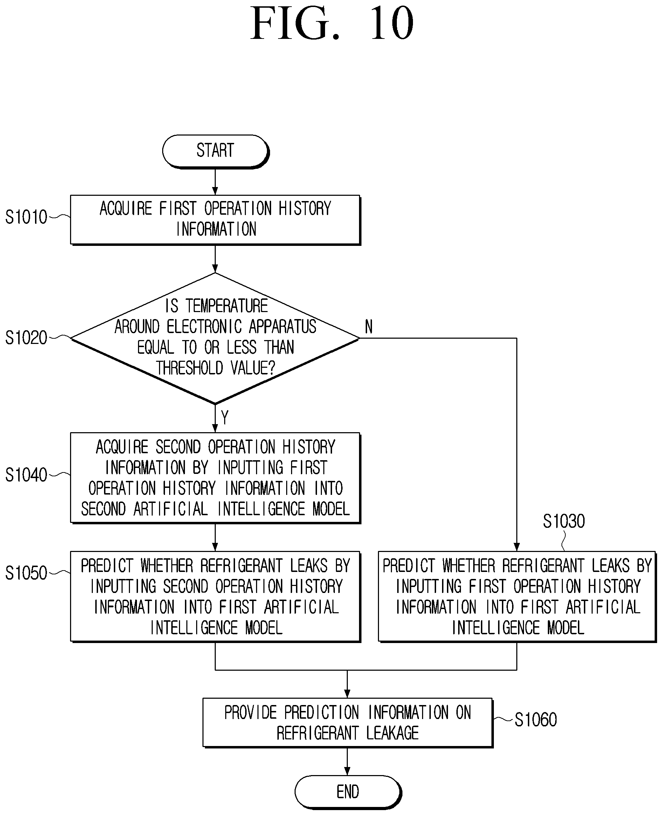

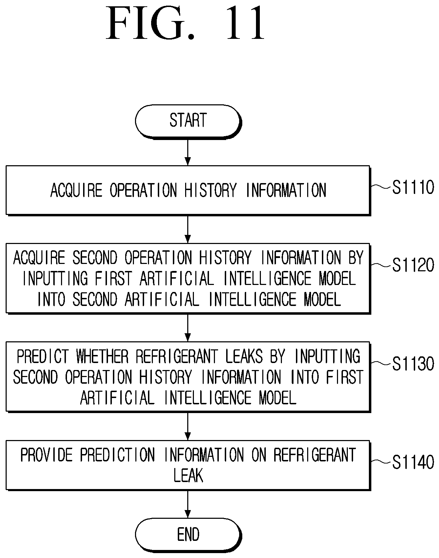

Although it has been described above that the electronic apparatus 100 and the air conditioner 200 are separate devices, the disclosure is not limited thereto, and the electronic apparatus 100 may be implemented as an air conditioner. When the electronic apparatus 100 is implemented as an air conditioner, the control method of the electronic apparatus 100 may vary depending on whether it is an air conditioner capable of cooling only or an air conditioner capable of heating and cooling, and this will be described in detail with reference to FIGS. 10 and 11.

FIG. 10 is a view illustrating a control method of the electronic apparatus 100 when the electronic apparatus 100 is an air conditioner capable of only cooling according to an embodiment.

The electronic apparatus 100 may acquire first operation history information (see step S1010). In that configuration, the first operation history information may refer to information related to the cooling operation acquired during the cooling operation of the electronic apparatus.

Also, the electronic apparatus 100 may identify whether a temperature around the electronic apparatus acquired through a sensor (not shown) is equal to or less than a threshold value (see step S1020).

When the temperature around the electronic apparatus 100 exceeds a threshold value (see step S1020-N), the electronic apparatus 100 may predict whether the refrigerant leaks by inputting the first operation history information to the first artificial intelligence model 111 (see step S1030).

When the temperature around the electronic apparatus 100 is less than or equal to the threshold value (see step S1020-Y), the electronic apparatus 100 may acquire the second operation history information by inputting the first operation history information to the second artificial intelligence model 112 (see step S1040). In that configuration, since the electronic apparatus 100 is an air conditioner capable of cooling only, an operation of separately identifying whether the electronic apparatus 100 is capable of heating may be omitted.

The electronic apparatus 100 may predict whether the refrigerant leaks by inputting the second operation history information to the first artificial intelligence model 111 (S1050).

Based on the prediction result, the electronic apparatus 100 may provide prediction information on refrigerant leakage (see step S1060).

FIG. 11 is a view illustrating a control method of the electronic apparatus 100 when the electronic apparatus 100 is an air conditioner capable of heating and cooling, according to an embodiment.

The electronic apparatus 100 may acquire operation history information of the electronic apparatus 100 (see step S1110). The operation history information may be operation history information acquired during a cooling operation or a heating operation of the electronic apparatus.

The electronic apparatus 100 may predict whether the refrigerant of the electronic apparatus 100 leaks by inputting the operation history information into the first artificial intelligence model 111 stored in the electronic apparatus 100 (see step S1120). Since the electronic apparatus 100 is an air conditioner capable of heating and cooling, the operation of converting the cooling history information into the heating history information may be omitted.

Although the electronic apparatus 100 is capable of heating and cooling, when the external temperature of the air conditioner 200 is less than or equal to the threshold value and the operation history information of the electronic apparatus 100 is the cooling operation history information, the electronic apparatus 100 may predict whether the refrigerant leaks in the electronic apparatus 100 by converting the cooling operation history information into heating operation history information, and inputting the heating operation history information into the first artificial intelligence model 111.

According to the prediction result, the electronic apparatus 100 may provide prediction information on refrigerant leakage (see step S1130).

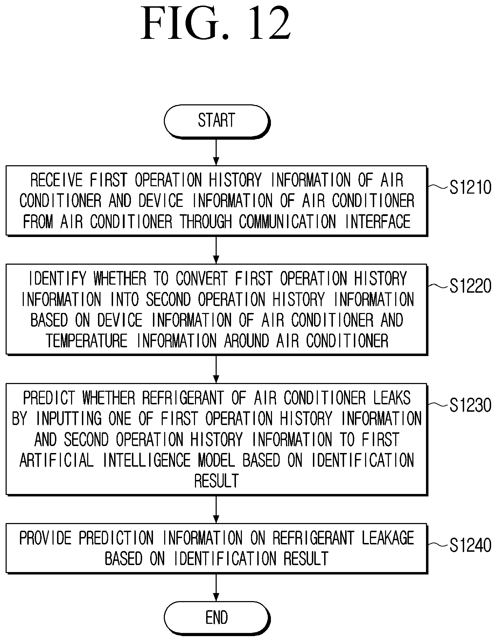

FIG. 12 is a view illustrating a method of controlling an electronic apparatus 100 according to an embodiment.

The electronic apparatus 100 may receive the first operation history information of the air conditioner 200 and device information of the air conditioner 200 from the air conditioner 200 through the communication interface 120 (see step S1210).

The electronic apparatus 100 may identify whether to convert the first operation history information into the second operation history information based on the device information of the air conditioner 200 and temperature information around the air conditioner 200 (see step S1220). When a temperature around the air conditioner 200 is equal to or less than the threshold value and it is identified that the air conditioner 200 is capable of only cooling, the electronic apparatus 100 may acquire second operation history information by inputting the first operation history information into the artificial intelligence model 112. The second artificial intelligence model 112 may be a learned artificial intelligence model that outputs the heating operation history information of the air conditioner when cooling operation history information of the air conditioner is input.

Based on the identification result, the electronic apparatus 100 may predict whether the refrigerant of the air conditioner leaks by inputting one of the first operation history information and the second operation history information to the first artificial intelligence model 111 stored in the electronic apparatus 100 (see step S1230). The first artificial intelligence model 111 may be a learned artificial intelligence model that predicts whether the refrigerant leaks from an air conditioner 200 when operation history information of the air conditioner 200 is input.

Based on the prediction result, the electronic apparatus 100 may provide prediction information on refrigerant leakage (see step S1240). In that configuration, the electronic apparatus 100 may transmit information for displaying a UI for service inspection of the air conditioner 200 to the user terminal device 300 together with prediction information on refrigerant leakage.

The term "module" as used herein includes units made up of hardware, software, or firmware, and may be used interchangeably with terms such as logic, logic blocks, components, or circuits. A "module" may be an integrally constructed component or a minimum unit or part thereof that performs one or more functions. For example, the module may be configured as an application-specific integrated circuit (ASIC).

According to an embodiment, the various embodiments described above may be implemented as software including instructions stored in a machine-readable storage media which is readable by a machine (e.g., a computer). The device may include the electronic apparatus100 according to the disclosed embodiments, as a device which calls the stored instructions from the storage media and which is operable according to the called instructions. When the instructions are executed by a processor, the processor may directory perform functions corresponding to the instructions using other components or the functions may be performed under a control of the processor. The instructions may include a code made by a compiler or a code executable by an interpreter. The machine-readable storage media may be provided in a form of a non-transitory storage media. Herein, the term "non-transitory" only denotes that a storage medium does not include a signal but is tangible, and does not distinguish the case where a data is semi-permanently stored in a storage medium from the case where a data is temporarily stored in a storage medium.

In addition, according to an embodiment, the methods according to various embodiments described above may be provided as a part of a computer program product. The computer program product may be traded between a seller and a buyer. The computer program product may be distributed in a form of the machine-readable storage media (e.g., compact disc read only memory (CD-ROM) or distributed online through an application store (e.g., PlayStore 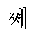 ). In a case of the online distribution, at least a portion of the computer program product may be at least temporarily stored or provisionally generated on the storage media such as a manufacturer's server, the application store's server, or a memory in a relay server.

The respective components (e.g., module or program) according to the various example embodiments may include a single entity or a plurality of entities, and some of the corresponding sub-components described above may be omitted, or another sub-component may be further added to the various example embodiments. Alternatively or additionally, some components (e.g., module or program) may be combined to form a single entity which performs the same or similar functions as the corresponding elements before being combined. Operations performed by a module, a program, or other component, according to various exemplary embodiments, may be sequential, parallel, or both, executed iteratively or heuristically, or at least some operations may be performed in a different order, omitted, or other operations may be added.

## Claims

1. An electronic apparatus comprising:
a communication interface;
a memory configured to store a first artificial intelligence model for predicting whether refrigerant leaks from an air conditioner and at least one instruction; and
a processor disposed in electrical communication with the memory, the processor being configured to control the electronic apparatus,
wherein the processor is configured to, by executing the at least one instruction, receive, through the communication interface from the air conditioner, first operation history information of the air conditioner and device information of the air conditioner,
determine whether to convert the first operation history information into second operation history information based on the device information of the air conditioner and temperature information of a region in proximity to the air conditioner,
predict whether the refrigerant leaks from the air conditioner by inputting either the first operation history information or the second operation history information into the first artificial intelligence model based on a result of the determination of whether to convert the first operation history into the second operation history, and
provide prediction information on the refrigerant leakage based on a result of the prediction of whether the refrigerant leaks from the air conditioner.

2. wherein the processor is further configured to, based on the first operation history information being converted to the second operation history information, predict whether the refrigerant leaks from the air conditioner by inputting the second operation history information into the first artificial intelligence model.

3. The apparatus of claim 1,
wherein the memory is configured to further store a second artificial intelligence model for converting cooling history information into heating history information, and
wherein the processor is configured to, based on a temperature of the region in proximity to the air conditioner being lower than or equal to a threshold value and based on the air conditioner being identified as only capable of cooling, acquire the second operation history information by inputting the first operation history information into the second artificial intelligence model, and
predict whether the refrigerant leaks from the air conditioner by inputting the second operation history information into the first artificial intelligence model.

4. The apparatus of claim 3,
wherein the second artificial intelligence model is configured to be a model that has been trained to learn a correlation between cooling history information and heating history information of the air conditioner or another air conditioner.

5. The apparatus of claim 1,
wherein the first operation history information is configured to be cooling history information of the air conditioner, and the second operation history information is configured to be heating history information of the air conditioner.

6. The apparatus of claim 1,
wherein the processor is configured to, based on the air conditioner being identified as capable of cooling and heating, predict whether the refrigerant leaks from the air conditioner by inputting the first operation history information into the first artificial intelligence model.

7. The apparatus of claim 6,
wherein the processor is configured to, based on temperature of the region in proximity to the air conditioner being lower than or equal to a threshold value and the first operation history information being cooling history information, convert the first operation history information into the second operation history information.

8. The apparatus of claim 1,
wherein the processor is configured to, based on temperature of the region in proximity to the air conditioner exceeding a threshold value, predict whether the refrigerant leaks from the air conditioner by inputting the first operation history information into the first artificial intelligence model.

9. The apparatus of claim 1,
wherein the first operation history information includes the temperature information of the region in proximity to the air conditioner, and the device information includes information on whether the air conditioner is capable of cooling or heating.

10. The apparatus of claim 1,
wherein the first artificial intelligence model is configured to be a model that has been trained based on cooling operation history information and heating operation history information of the air conditioner leaking refrigerant, and cooling operation history information and heating operation history information of the air conditioner not leaking refrigerant.

11. A method for controlling an electronic apparatus comprising:
receiving, from an air conditioner, first operation history information of the air conditioner and device information of the air conditioner;
determining whether to convert the first operation history information into second operation history information based on the device information of the air conditioner and temperature information of a region in proximity to the air conditioner;
predicting whether refrigerant leaks from the air conditioner by inputting either the first operation history information or the second operation history information into a first artificial intelligence model based on a result of the determination of whether to convert the first operation history into the second operation history; and
providing prediction information on the refrigerant leakage based on a result of the prediction of whether the refrigerant leaks from the air conditioner.

12. The method of claim 11,
wherein the predicting whether the refrigerant leaks includes, based on the first operation history information being converted to the second operation history information, predicting whether the refrigerant leaks from the air conditioner by inputting the second operation history information into the first artificial intelligence model.

13. The method of claim 11,
wherein the predicting whether the refrigerant leaks includes, based on a temperature of the region in proximity to the air conditioner being lower than or equal to a threshold value and based on the air conditioner being identified as only capable of cooling, acquiring the second operation history information by inputting the first operation history information into a second artificial intelligence model for converting cooling history information into heating history information, and
predicting whether the refrigerant leaks from the air conditioner by inputting the second operation history information into the first artificial intelligence model.

14. The method of claim 13,
wherein the second artificial intelligence model is configured to be a model that has been trained to learn a correlation between cooling history information and heating history information of the air conditioner or another air conditioner.

15. The method of claim 11,
wherein the first operation history information is configured to be cooling history information of the air conditioner, and the second operation history information is configured to be heating history information of the air conditioner.
